# EUROPEAN PATENT APPLICATION

(11) **EP 4 209 750 A1**
(43) Date of publication of application: **12.07.2023**
(21) Application number: 22150851.8
(22) Date of filing: 11.01.2022
(51) Int. Cl.: G01B 3/06

(54) **MAGNETIC FOLDING RULE**

(71) Applicant: Magnettum Group AB, 165 75 Hässelby (SE)
(72) Inventor: VÄLILÄ, Kevin, 135 46 Tyresö (SE)
(74) Representative: Brann AB

(57) **Abstract**

The proposed technology relates to a folding-rule section (14) for a folding rule (10). The folding-rule section (14) comprises: an elongated section body (92) having a first end (24) and a second end (26), and a first magnet (36) embedded in the section body (92) and located between the first end (24) and the second end (26). The proposed technology further relates to accessories (40) for such a folding-rule section (14), and a folding rule (10) having such a folding-rule section (14).

## Description

### Technical field

The proposed technology relates to the field of measurement tools used in carpentry and construction, and in particular to multi-sectional folding rules.

### Background

A folding rule is a measuring instruments similar in function to rulers. Folding rules are also called jointed rules, carpenter's rules, and folding meter sticks. They are composed of several sections that are joined in a series by rotary joint. Typically, the sections are rigid and made of wood, plastic, or metal. When fully expanded for use, folding rules are straight like a ruler. When collapsed by folding they are portable and can be stored in a small space, such as a pocket in a carpenter's belt. For example, a folding rule may have ten rigid sections that are joined by nine joints. The distance between the joints of the eight inner sections can be 20 cm, and the distance between the end and the joint of the end sections can be 20 cm, giving a total length of 2 m for the folding rule when expanded.

Metal is a common construction material in house building, for example sheet-metal framing members, such as studs. Measurements are commonly made on framing members after they have been secured to the framing structure, making the measurement harder to perform, in particular for structures at elevated positions, such as on lintels and or headers. This problem is also present in installations of ventilation ducts, which are commonly at elevated positions.

Folding rules can be used as sliding supports for marking or cutting parallel to an edge of an object. A marker or knife is held at the end of an end section by one hand, while the other hand holds an inner section and functions as a sliding stop defining the distance between the edge and the marking or cut. This operation can be hard to perform at greater distances to the edge.

### Summary

The proposed technology aims at making measurements with a folding rule easier, for example in the above-described scenarios. In a first aspect of the proposed technology, a folding-rule section, or strip, for a folding rule is provided. The folding-rule section comprises: an elongated section body having a first end, a second end, a first side, a second side, a first edge, and a second edge. The first side and the second side are elongated, parallel, and extends between the first end and the second end. The first edge and a second edge are straight, parallel, extend between the first end and the second end, and interconnect the first side and the second side. The folding-rule section further comprises: a first magnet embedded in, or attached to, the section body and located between the first end and the second end.

It is understood that the first side and the second side are planar, or that each defines a planar surface. The first magnet may be spaced apart from the first end and the second end. For example, the first magnet may be spaced apart from the first and second ends by at least 10 %, or 20%, of the length of the section body. This means that the first magnet is not located at the first end nor the second end, which contributes to a more stable attachment and an easier placement of the folding rule. The first magnet may be spaced apart from the first edge and the second edge. For example, the first magnet may be spaced apart from the first and second edges ends by at least 10 %, or 20%, of the total width of the section body. This means that the first magnet is not located at the first edge nor the second edge, which also contributes to a more stable attachment and easier placement of the folding rule. Typically, one of the ends or edges of the folding rule is the first part that contacts the supporting structure upon placement. With a magnet positioned at one of these locations, the magnet will engage the supporting structure before the folding rule is in position, which makes the positioning of the folding rule harder.

That a first component is embedded in a second component means that the former does not extend from the latter. For example, with an embedded first magnet it does not extend from the first side, second side, first edge, or second edge of the section body.

The folding-rule section may be flexible in a direction perpendicular to the first side and the second side. It may be rigid in a direction parallel to the first side and the second side. The section body may be a monolithic structure, for example a unitary structure manufactured from a single piece of material. For example, the section body may be manufactured from plastics. The section body may be non-magnetic, or of a non-magnetic material. The non-magnetic material may have a relative permeability of approximately 1.

Here, the length of the section body is understood as the distance between the first end and the second end, the width of the section body is understood as the distance between the first edge and the second edge, and the thickness of the section body is understood as the distance between the first side and the second side.

It is understood that a section body has a geometric centre, or centre-of-gravity, between the first end and the second end, and the first magnet may be located closer to the geometric centre than to the first end and the second end. Alternatively, the first magnet may be located at the geometric centre between first end and the second end. If the folding-rule section is an end section, this allows for the folding rule to be attached to a vertical surface with a horizontal orientation of the first edge and the second edge. A different position of the first magnet may result an imbalance causing the folding rule to rotate after being attached in a horizontal orientation.

The first magnet may be spaced apart from the first side and/or the second side. Worded differently, the first side and/or the second side of the section body may extend over the first magnet, or the section body may fully enclose the first magnet. This contributes to an improved structural strength of the folding-rule section. Alternatively, the first magnet may be flush with the first side and/or the second side of the section body. The first magnet may be exposed to the surroundings of the folding-rule section. This contributes to an improved attachment of the folding-rule section.

The folding-rule section may comprise: a second magnet embedded in, or attached to, the folding-rule section, wherein the second magnet is located between the first end and the second end and spaced apart from the first magnet. The fact that the second magnet is spaced apart from the first magnet contributes to a more stable support of the folding-rule section, or the folding rule as a whole.

As for the first magnet, the second magnet may be spaced apart from the first end and the second end. For example, the first and second magnets may be spaced apart from the first and second ends by at least 10 %, or 20%, of the length of the section body. The second magnet may be spaced apart from the first edge and the second edge. For example, the first and second magnets may be spaced apart from the first and second edges by at least 10 %, or 20%, of the total width of the section body.

As mentioned above, the section body has a geometric centre, or centre-of-gravity, between first end and the second end, and the first magnet is located between the geometric centre and the first end, and the second magnet is located between the geometric centre and the second end.

These locations of the first and second magnets contribute to a more stable support of the folding-rule section, or the folding rule as a whole. The first and second magnets may be located at halfway between the geometric centre and the first and second ends, respectively. For example, if the section is 20 cm between joints, the first magnet may be located at 5 cm and the second magnet may be located at 15 cm from one of the joints.

Similar to the first magnet, the second magnet may be spaced apart from the first side and/or the second side. Worded differently, the first side and/or the second side of the section body may extend over the second magnet, or the section body may fully enclose the second magnet. This contributes to an improved structural strength of the folding-rule section. Alternatively, the second magnet may be flush with the first side and/or the second side of the section body. The second magnet may be exposed to the surroundings of the folding-rule section.

The folding-rule section may be an end section. The folding-rule section may then have a first through-hole at the first or second end configured to cooperate with a rotary joint. Alternatively, the folding-rule section may be an inner section. The section may then have a first through-hole at the first end configured to cooperate with a first rotary joint and a second through-hole at the second end configured to cooperated with a second rotary joint. It is understood that the through-holes are spaced apart from the ends. The through-holes may be countersunk, or tapered counterbores.

It is understood that the first and second magnets are permanent magnets, such as neodymium magnets. It is further understood that the first and second magnets are arranged or oriented with respective magnetic field transverse to the first side and the second side at the section body. This contributes to an improved support by the magnets. The magnet may have a circular-cylindric geometry with the cylinder axis aligned transversely, or perpendicularly, to the first side and the second side. This contributes to an easier manufacturing.

The poles, or magnetic fields, of the first and second magnets may be oriented in opposite directions. This may be advantageous in combination with an accessory having cooperating magnets, as it can be used to define a single orientation of the accessory relative to the folding-rule section. Alternatively, the first and second magnets may be oriented in the same direction.

The first magnet may generate an attractive force at contact with an object of demagnetized pure iron that is 2 to 20, 3 to 16, or 4 to 12, times greater than the gravitational force acting on the folding-rule section. Alternatively, the first magnet may generate an attractive force at contact with an object of demagnetized pure iron that is in the range 0.2 to 2N, 0.3 to 1.6N, or 0.4 to 1.2N, or in one of the ranges 0.2N to 0.5N, 0.5N to 0.8N, 0.8N to 1.1N, 1.1N to 1.4N, 1.4N to 1.7N, and 1.7N to 2.0N.

If the folding-rule section has a second magnet, the first magnet and the second magnet may generate a combined attractive force at contact with an object of demagnetized pure iron that is 2 to 20, 3 to 16, or 4 to 12, times greater than the gravitational force acting on the folding-rule section. Alternatively, they may generate a combined attractive force at contact with an object of demagnetized pure iron that in the range 0.2 to 2N, 0.3 to 1.6N, or 0.4 to 1.2N, or in one of the ranges 0.2N to 0.5N, 0.5N to 0.8N, 0.8N to 1.1N, 1.1N to 1.4N, 1.4N to 1.7N, and 1.7N to 2.0N.

It has been found that with the specified magnetic strengths, a folding rule can be supported on commonly used construction steel and be removed with relative ease.

The folding-rule section may have gradation marks on the first side and/or the second side of the section body. Preferably, the gradation marks are spaced apart at regular intervals, for example 1 mm in length, along the first edge and the second edge. Additionally, the gradation marks may be associated with numerals providing measurement information in cm or inches. For example, every tenth gradation mark may be associated with a numeral and the gradation marks are spaced apart by 1 mm. The numeral may be arranged to correspond to a measurement starting from the first end. The gradation marks may be printed and/or etched.

According to a second aspect of the proposed technology, an accessory, or add-on, for use in combination with a folding-rule section according to the first aspect of the proposed technology is provided. The accessory comprises: a base portion configured to cooperate with, or couple to, the first magnet and attach the accessory to the folding-rule section.

According to a third aspect of the proposed technology, an assembly is provided comprising a folding-rule section according to the first aspect of the proposed technology and an accessory according the second aspect of the proposed technology. Features of the accessory that are described as configured to cooperation with features of the folding-rule section may be regarded as cooperating in the assembly. For example, in the assembly the base portion may be regarded as cooperating with, or couple to, the first magnet and the accessory may be regarded as attached to the folding-rule section.

The base portion may define a support surface configured to engage, or be flush with, the first side or the second side of the section body. It is understood that at least three contact points are required to define a support surface. For example, the support surface may be planar.

The base portion of the accessory may be of a magnetizable material. The magnetizable material may be a paramagnetic or ferromagnetic material, preferably the latter. For example, the magnetizable material may be of ferromagnetic steel.

The base portion may comprise: a first accessory magnet supported by, or attached to, the base portion and configured to cooperate with, or couple to, the first magnet of the folding-rule section. It is understood that the first accessory magnet is a permanent magnet, such as a neodymium magnet. Alternatively, the base portion may comprise: a first magnetizable portion supported by the base portion configured to cooperate with, or couple to, the first magnet. For example, the first magnetizable portion may be of a ferromagnetic material, such as a ferromagnetic steel. Here, the first accessory magnet and the first magnetizable portion may jointly be regarded as a first magnetic portion.

The accessory may comprise: a first side portion and a second side portion, wherein the first side portion and the second side portion are connected to the base portion and configured to engage the first edge and the second edge of the section body of the folding-rule section, respectively, to mechanically prevent the accessory from rotating relative to the folding-rule section. The first and second side portions may be elongated and configured to extend along at least a portion of the folding-rule section.

The accessory may comprise: a second accessory magnet supported by the base portion and configured to cooperate with, or couple to, the second magnet of the folding-rule section.

It is understood that the second accessory magnet is a permanent magnet, such as a neodymium magnet. Alternatively, the accessory may comprise: a second magnetizable portion supported by the base portion configured to cooperate with, or couple to, the second magnet. For example, the second magnetizable portion may be of a ferromagnetic material, such as a ferromagnetic steel. Here, the second accessory magnet and the second magnetizable portion may jointly be regarded as a second magnetic portion.

The folding-rule section may be an end section and the accessory may comprise: a hook supported by, or connected to, the base portion and configured to engage, or abut, the first end or the second end of the section body. This means that the hook will be located at the first end or the second end in a measurement. Thus, the hook may be used to accurately define the position of the accessory along the folding-rule section.

Each of the first magnet and the first accessory magnet may have a centre. The distance between the hook and the centre of the first accessory magnet may be smaller than the distance between the first end and the centre of the first magnet. Similarly, each of the first magnet and the first magnetizable portion may have a centre. The distance between the hook and the centre of the first magnetizable portion may be smaller than the distance between the first end and the centre of the first magnet. This has the effect that the hook is biased against the first end.

The hook of the accessory may define a tang configured to extend from the folding-rule section at the first end or the second end for engaging a corner in a measurement. The tang may extend transversely relative to the support surface of the base portion.

The hook may form, or comprise, a cutting edge, for example for cutting in a measurement, or during use. The cutting edge may be located at the first end or the second end. The cutting edge may be configured to align with the first end or the second end or be transverse to the first and second edges. The cutting edge may have a side portion extending in a direction transverse to the support surface of the base portion. The cutting edge may be configured, or oriented, to cut parallel to the first side and the second side and transversely, or perpendicular, to the first side and the second side. For example, the cutting edge can be used to cut the facer or backer paper of a drywall to define a breaking edge parallel to an edge pf the drywall. The abovementioned first and second side portions are advantageous in combination with the hook having a cutting edge since they can prevent the accessory from shifting relative to the folding-rule section when cutting.

The accessory may comprise a marker support configured to support a marker in a measurement, or during use. The marker support may be located at the first end or the second end. For example, the marker may be a pen or a pencil. The accessory may further comprise the marker, which may be integral to the accessory. The marker may be located at the first end or the second end or be arranged to provide a marking at the first end or the second end.

As mentioned above, the base portion may define a support surface configured to engage, or be flush with, the first side or the second side of the section body. The hook may extend transversely, or perpendicularly, to the support surface. The hook may further have a length transverse, or perpendicular, to the support surface that is greater than the thickness of the section body of the folding-rule section. For example, if the hook has the function of a tang, the length may be between 4 and 8 times greater than the thickness, and if the hook has a cutting edge, the length may be between 2 and 3 times greater than the thickness. This means that the hook extends from the folding-rule section.

The accessory may comprise a spirit level, or tubular spirit level, supported by the base portion. The spirit level may be configured to extend parallel to the first edge and the second edge. It may be configured to indicate a horizontal orientation with the first edge and the second edge of the folding-rule section oriented horizontally and the first side and second side of the folding-rule section oriented vertically. For example, this can be achieved by the centre of the spirit level being the highest point in this orientation.

The base portion may be configured to have a width that is smaller than, or equal to, the width of the section body of the folding-rule section. It is understood that the width of the base portion is transverse to the first edge and the second edge of the section body. The smaller width may allow for a portion of the first or second sides at the first and second edges to be visually inspected with the accessory positioned on the first or second side, for example to read gradation marks and to use the folding-rule section as support for cutting or marking. The equal width may allow for the base portion and the first and second edges to be gripped simultaneously by a user, for example to ensure a correct alignment. It is understood that the first side portion and the second side portion described above may be absent when the width of the base portion is smaller than the width of the folding-rule section.

The folding-rule section may be an end section and the accessory comprises: a narrow portion supported by, or connected to, the base portion and configured to be located at the first end or the second end of the section body, wherein the narrow portion has a width that is smaller than, or equal to, the width of the section body of the folding-rule section.

If the accessory has a hook as described above, the narrow portion may connect the hook to the base portion. It is understood that the width of the narrow portion is transverse to the first edge and the second edge of the section body. The smaller width allows for the first or second end 4 or 2to be contacted or visually inspected by a user, for example to confirm that the accessory is in the correct position with respects to the first or second end 4 or 26). It is understood that the first side portion and the second side portion described above may be present when the accessory has a narrow portion.

The folding-rule section may be an end section and the accessory may form: an aperture, or window, configured to be located at the first end or the second end of the section body. For example, the aperture may be formed by the base portion or the narrow portion. The aperture may allow for the first or second end to be visually inspected by a user, for example to confirm that the accessory is in the correct position with respects to the first or second.

According to a fourth aspect of the proposed technology a folding rule is provided comprising: a plurality of sections and a plurality of rotary joints, wherein the rotary joints connect the sections in a series, and at least one of the sections is a folding-rule section according to the first aspect of the proposed technology. It is understood that the rotary joints allow the folding rule to be fully expanded or collapsed. When fully expanded, the folding rule defines a straight line.

The plurality of sections may be composed of a first end section, a plurality of inner sections, a second end section, and a plurality of rotary joints, wherein the rotary joints connect the first end section, the inner sections, and the second end section in a series, and at least one of the first end section, the inner sections, and the second end section is a folding-rule section according to the first aspect of the proposed technology.

The folding rule may have ten sections, or the plurality may be ten in number. Each of the first, fourth, seventh, and tenth sections in the series may be a folding-rule section according to the first aspect of the proposed technology. In one alternative, only these sections have a magnet. This means that only the first end section, the third inner section, the sixth inner section, and the second end section is a folding-rule section according to the first aspect of the proposed technology. This also means that that each of the remaining sections lacks a magnet, has no magnet, or is magnet free. In other words, the second, third, fifth, sixth, eight, and ninth sections in the series do not have a magnet. When the expanded folding rule is attached to an object, these sections are easier to pull from the object, making the removal of the complete folding rule easier.

In another alternative, all sections of the folding rule are folding-rule sections according to the first aspect of the proposed technology. The first magnets may be oriented and positioned so that in a collapsed state of the folding rule the magnets on neighbouring folding rule sections are attracted to each other and their respective magnetic fields add. This allows for the folding rule to be attached to a magnetizable surface in the collapsed state with weaker magnets. For example, the first magnets may be aligned with the line of gravity transverse to the first and second sides in the collapsed state.

Each rotary joint may connect a pair of neighbouring sections in the series of sections. The rotary joint may releasably connect the pair of neighbouring sections. The rotary joint may be removable. This allows for a section to be removed and replaced by another section, or the number of sections of folding rule to be changed, effectively changing the length of the folding rule. A first section of the pair may have a first through hole at the rotary joint, a second section of the pair may have a second through hole at the rotary joint, wherein the first through hole and the second through hole are aligned. The through-holes may be countersunk, or tapered counterbores.

The rotary joint may comprise: a female screw and a male screw interconnected via the first through hole and the second through hole and cooperating to press the first section and the second section together, or to bias the first section against the second section. The male screw may be releasably connected to the female screw, allowing the rotary joint to be removed, or to releasably connect the pair of neighbouring sections.

The female screw may comprise a screw head engaging one of the first and second sections. Similarly, the male screw may comprise a screw head engaging the other of the first and second sections. At least one of the screw heads may form a tool interface, preferably the screw head of the male screw. For example, the screw head of the male screw may form a slot for cooperating with a slotted screwdriver. One of the screw heads may form a tool interface, preferably the screw head of the male screw, while the other is rotationally locked to the first or second section, for example by the through hole or of the section having a hexagonal portion and the screw head having a hexagonal shape cooperating with the hexagonal portion. This has the advantage that the rotary joint can be released or removed using a single tool. One of the male screw and female screw may be permanently attached to the first or second section, preferably the latter.

The folding rule may comprise a plurality of locks, wherein each lock engages a first section and a second section of a pair of neighbouring sections and releasably locks the first section and the second section in a collapsed state, or orientation, in which the first section and the second section are aligned and overlap and in an expanded state, or orientation, in which the first section and the second section are aligned and extend from one another. The lock may further releasably lock the first section and the second section in a first or a second intermediate state, or orientation, in which the first section and the second section are at a right angle to one another. It is understood the second section extend in opposite directions relative to the first section in the first and second intermediate states. Effectively, this means that the lock releasably locks the first section and the second section at the relative angles 0°, 90°, 180°, and 270°.

The lock may comprise one or more protrusions formed by the first section, one or more first depressions formed by the second section, and one or more second depressions formed by the second section, wherein the protrusions face the second section and the first depressions, and the second depressions face the first section. The protrusions cooperate with the first depressions and releasably lock the first section and the second section in the collapsed state and the expanded state. The protrusions further cooperate with the second depressions and releasably lock the first section and the second section in the intermediate states.

According to a fifth aspect of the proposed technology, a folding-rule assembly is provided comprising a folding rule according to the fourth aspect of the proposed technology having and an accessory according to the second aspect of the proposed technology.

### Brief description of the drawings

A more complete understanding of the abovementioned and other features and advantages of the proposed technology will be apparent from the following detailed description of preferred embodiments in conjunction with the appended drawings, wherein:
- Figs. 1a and 1b: illustrate a folding rule in a collapsed state respectively a partly expanded state,
- Figs. 2a and 2b: illustrate a folding-rule section that is an end section and has a single magnet,
- Figs. 3a and 3b: illustrate a folding-rule section that is an inner section and has a single magnet,
- Figs. 4a and 4b: illustrate a folding-rule section that is an end section and has two magnets,
- Figs. 5a and 5b: illustrate a folding-rule section that is an inner section and has two magnets,
- Figs. 6a to 6f: illustrate an assembly of an accessory with a tang and a folding rule section that is an end section,
- Figs. 7a to 7f: illustrate another assembly of an accessory with a tang and a folding rule section that is an end section,
- Figs. 8a to 8f: illustrate another assembly of an accessory with a tang and a folding rule section that is an end section,
- Figs. 9a to 9c: illustrate an accessory with a hook having a cutting edge,
- Figs. 10a to 10c: illustrate an accessory with a hook and a marker support,
- Figs. 11a to 11c: illustrate an assembly of an accessory with a sprit level and a folding rule section that is an inner section,
- Figs. 12a to 12c: illustrate another assembly of an accessory with spirit level and a folding rule section that is an inner section,
- Fig. 13: illustrates another folding rule in a partly expanded state,
- Figs. 14a and 14b: illustrate alternative folding-rule sections with a single magnet,
- Figs. 15a and 15b: illustrate alternative folding-rule sections with two magnets,
- Figs. 16a and 16b: illustrate a joint of the folding rule of Figs. 1a and 1b, and
- Figs. 17a to 17f: illustrate a lock of the folding rule of Figs. 1a and 1b.

### Description of the drawings

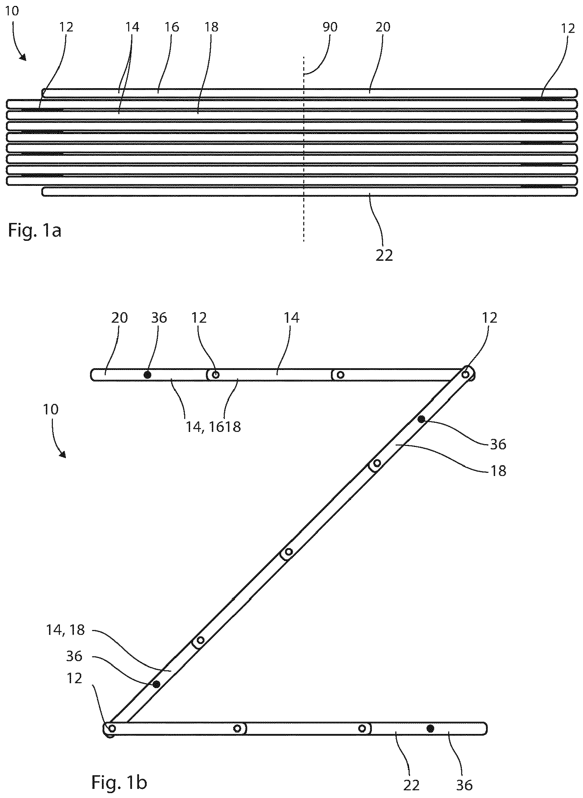

A folding rule 10 in a collapsed state respectively a partly expanded state is shown in Figs. 1a and 1b. The folding rule 10 has ten sections 14 and nine rotary joints 12 connecting the sections 14 in series. The rotary joints 12 allow the folding rule 10 to be fully expanded to define a straight line or collapsed for easy handling or storage. Throughout this description, the terms section and folding-rule section are used alternatingly to indicate a section 14 of the folding rule 10.

The folding rule 10 has a first end section 20, eight inner sections 18, and a second end section 22. Each of the first, fourth, seventh, and tenth sections 14 are fitted with a single magnet 36. This means that the third and sixth inner sections 18 have a magnet 36. The remaining inner sections 18 differ only in that they have no magnets.

Each folding-rule section 14 is a unitary body manufactured from a single piece of plastic material. It has an elongated section body 92 with a first end 24, a second end 26, a first side 28 that is planar, a second side 30 that is planar, a first edge 32 that is straight, and a second edge 34 that is straight. The first side 28 and the second side 30 are elongated, parallel, and extend between the first end 24 and the second end 26. The first edge 32 and a second edge 34 are straight, parallel, extends between the first end 24 and the second end 26, and interconnect the first side 28 and the second side 30.

The folding-rule section 14 has gradation marks on the first side 28 and the second side 30 of the section body 92. The gradation marks are spaced apart at regular intervals 1mm in length along the first edge 32 and the second edge 32. Numerals indicating measurements in cm are presented for every tenth gradation mark. The numerals are arranged to correspond to a measurement starting from the first end 24 of the first end section 20.

The length of the section body 92 between the first end 24 and the second end 26 is greater than the width of the section body 92 between the first edge 32 and the second edge 34, which in turn is greater than the thickness of the section body 92 between the first side 28 and the second side 30. The folding-rule section 14 is flexible in a direction perpendicular to the first side 28 and the second side 30 and rigid in a plane parallel to the first side 28 and the second side 30.

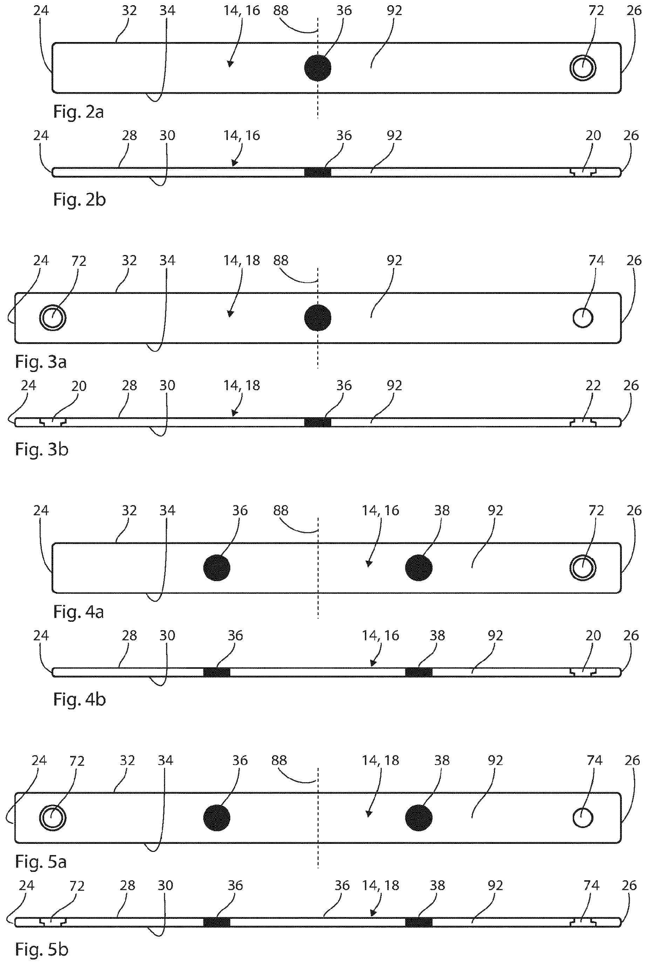

The first and tenth sections 14, which are end sections 16, are shown in Figs. 2a and 2b, and the fourth and seventh sections 14, which are inner section 18 are shown in Figs. 3a and 3b. Each of these sections 16 and 18 has a first magnet 36 in the form of a permanent neodymium magnet. The first magnet 36 is embedded in the section body 92 at the geometric centre 88 of the section body 92, which corresponds to the centre-of-gravity of the section body 92. This means that the first magnet is located between the first end 24 and the second end 26, and that it is located closer to the geometric centre 88 than to the first end 24 and the second end 26. The first magnet 36 has a circular-cylindric geometry and is oriented with its magnetic poles at the first side 28 and the second side 30, which means that its magnetic field is transverse to the first side 28 and the second side 30 at the section body 92.

Each of the first magnets 36 generate an attractive force of 0.5N at contact with an object of demagnetized pure iron, which means that the force is approximately 5 times greater than the gravitational force acting on the folding-rule section 14 having a weight of 10g.

The end section 16 in Figs. 2a and 2b has a tapered counterbored first through-hole 72 spaced apart from the second end 26 and that can receive a rotary joint 12. The inner section 18 in Figs. 3a and 3b has a tapered counterbored first and second through-holes 72 and 74 spaced apart from the first and second ends 24 and 26, respectively.

An alternative embodiment of end section 16 to the end section 16 in Figs. 2a and 2b is shown in Figs. 4a and 4b, and an alternative inner section 18 to the inner section 18 in Figs. 3a and 3b is shown in Figs. 5a and 5b. The indexing of the features Figs. 2a, 2b, 3a, and 3b has been maintained and indicate the corresponding features. The sections in Figs. 4a, 4b, 5a, and 5b differ in that the location of the first magnet 36 is different and that they have a second magnet 38 spaced apart from the first magnet 40. Similar to the first magnet 36, the second magnet 38 is a permanent neodymium magnet embedded in the section body 92 between the first end 24 and the second end 26. The first magnet 36 is located between the geometric centre 88 and the first end 24 and the second magnet 38 is located between the geometric centre 88 and the second end 24. The poles of the first and second magnets 36, 38 are oriented in the same direction. In an alternative embodiment, they are oriented in opposite directions.

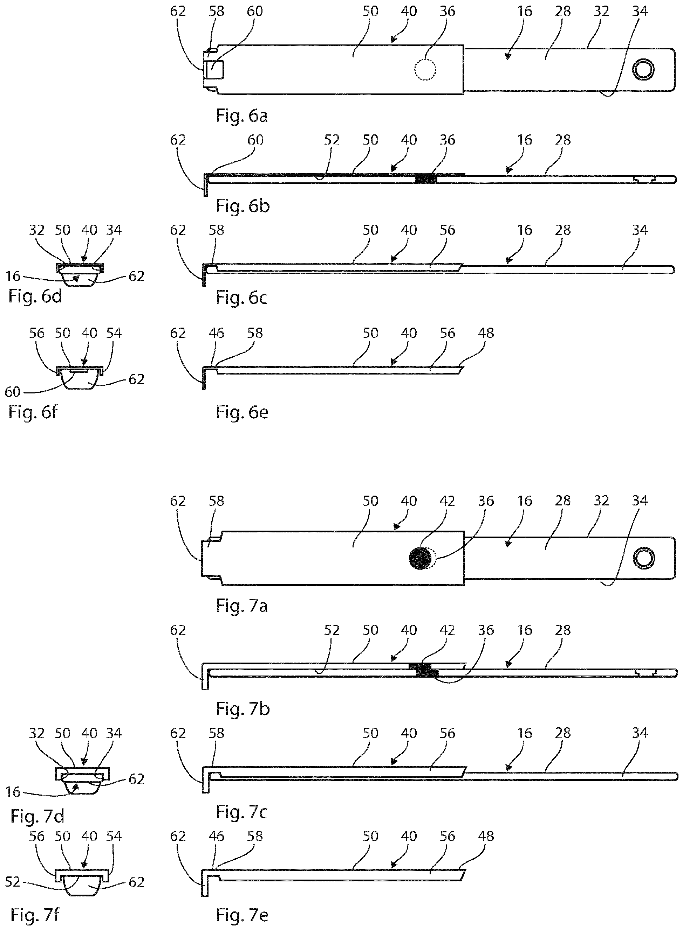

An assembly of an accessory 40 and the end section 16 of Figs. 2a and 2b is shown in Figs. 6a to 6f. The accessory 40 has a base portion 50 and the complete accessory is manufactured from ferromagnetic steel. This way the base portion 50 couples to the first magnet 36 and attaches the accessory 40 to the folding-rule section 14. The base portion 50 has a planar support surface 52 that engages and is flush with the first side 28 of the section body 92. The accessory 40 further has an elongated first side portion 54 and an elongated second side portion 56 that are connected to the base portion 50 and engage and extend along the first edge 32 and the second edge 34 of the section body 92, respectively. The side portions 54 and 56 have a length transversely to the support surface 52 that is smaller than the thickness of the end section 16. This way, they do not extend from the end section 16.

The accessory 40 has a hook 62 that is connected to the base portion 50 and abuts the first end 24 of the section body 92 do define the correct position of the accessory 40 on the end section 16. The hook 62 extends transversely to the support surface 52 and has a length that is greater than the thickness of the end section 16. This means that the hook 62 extends from the end section 16 at the first end 24 to define a tang 62 that can engage a corner in a measurement.

The accessory 40 has a narrow portion 58 with a width that is smaller than the width of the section body 92 and is located at the first end 24. The narrow portion 58 connects the hook 62 and the base portion 50. It further has an aperture 60 located at the first end 24 of the section body 92 through which the first end 24 can be visually inspected by a user.

Another assembly of an accessory 40 and the end section of Figs. 2a and 2b is shown in Figs. 7a to 7f. The indexing of Figs. 6a to 6f has been maintained for features having the same function. The base portion 50 has a first accessory magnet 42 in the form of a permanent neodymium magnet located at the first magnet 36 of the end section 16. Apart from the first accessory magnet 42, the accessory 40 is manufactured from a non-magnetic plastic. The poles of the first accessory magnet 42 are aligned with the poles of the first magnet 36 so that magnets 36 and 42 attract each other. In an alternative embodiment, the first accessory magnet 42 is replaced with a first magnetizable portion 42 of ferromagnetic steel.

The distance between the hook 62 and the centre of the first accessory magnet 42 is smaller than the distance between the first end 24 and the centre of the first magnet 36, thus pulling the hook 62 defining a tang 62 against the first end 24, 26.

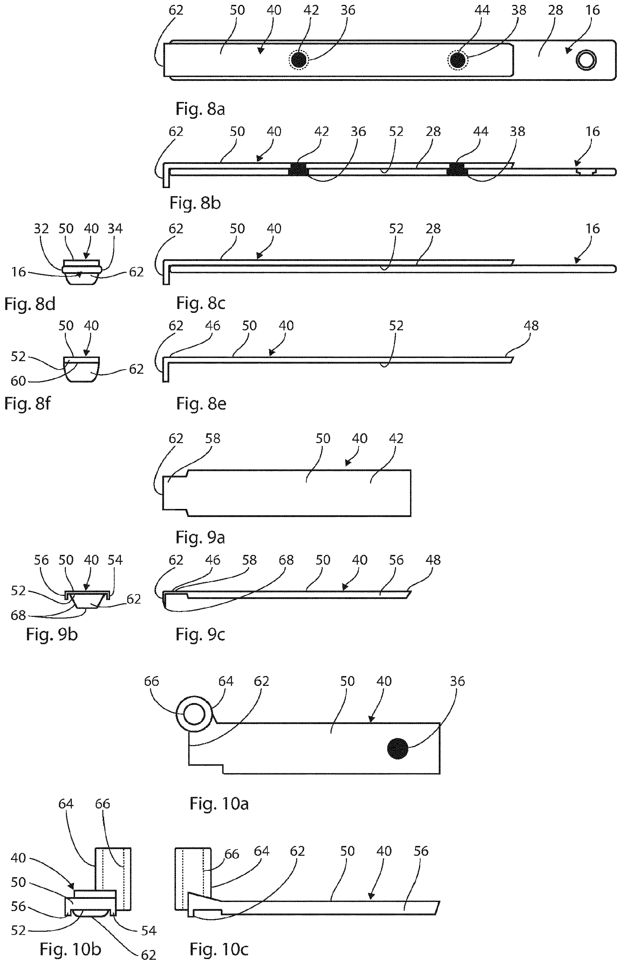

An assembly of an accessory 40 and the end section of Figs. 4a and 4b is shown in Figs. 8a to 8f. The indexing of Figs. 6a to 6f has been maintained for features having the same function. The accessory 40 has no side portions and no narrow portion, and the width of the base portion 50 is smaller than the width of the end section 16. In an alternative embodiment the widths are the same.

The orientation of the accessory 40 is defined by a first accessory magnet 42 and a second accessory magnet 44 in the form of a permanent neodymium magnets located at and centred on the first magnet 36 and second magnet 38 of the end section 16. Apart from the first and second accessory magnets 42 and 44, the accessory 40 is manufactured from a non-magnetic plastic. The poles of the first accessory magnet 42 are aligned with the poles of the first magnet 36 so that magnets 36 and 42 attract each other. Similarly, the poles of the second accessory magnet 44 are aligned with the poles of the second magnet 38. In an alternative embodiment, the first and second accessory magnets 42 and 44 are replaced with a first and second magnetizable portion 42 and 44 of ferromagnetic steel.

An accessory 40 with a hook 62 having a cutting edge 68 is shown in Figs. 9a to 9c. Apart from the cutting edge 68, the accessory 40 shares all other features with the accessory 40 shown in Figs. 6a to 6f. The cutting edge 68 is transverse to the first and second edges 32 and 34 and has side portions extending in a direction transverse to the support surface 52 of the base portion 50. This way, the cutting edge 68 can cut parallel to the first and second sides 28 and 30 and transversely to the first and second edges 32 and 34.

An accessory 40 with hook 62 and a marker support 64 is shown in Figs. 10a to 10c. The indexing of Figs. 6a to 6f has been maintained for features having the same function. The base portion 50 has a first accessory magnet 42 in the form of a permanent neodymium magnet. Apart from the first accessory magnet 42, the accessory 40 is manufactured from a non-magnetic plastic. In an alternative embodiment, the first accessory magnet 42 is replaced with a first magnetizable portion 42 of ferromagnetic steel.

The marker support 64 forms a cylindrical through hole 66 that can support a pen oriented transversely to the support surface 52 of the base portion 50 and configured to support a marker in the form of a pen during use. The marker support 64 is arranged to provide a marking at the first end 24 of the end section 16 during use. In one embodiment, the pen is permanently attached to the marker support 64, making the marker integral to the accessory 40.

The hook 62 extends transversely to the support surface 52 and has a length that is smaller than the thickness of the end section 16. This means that the hook 62 does not extend from the end section 16, which allows the marker to be used on a flat surface.

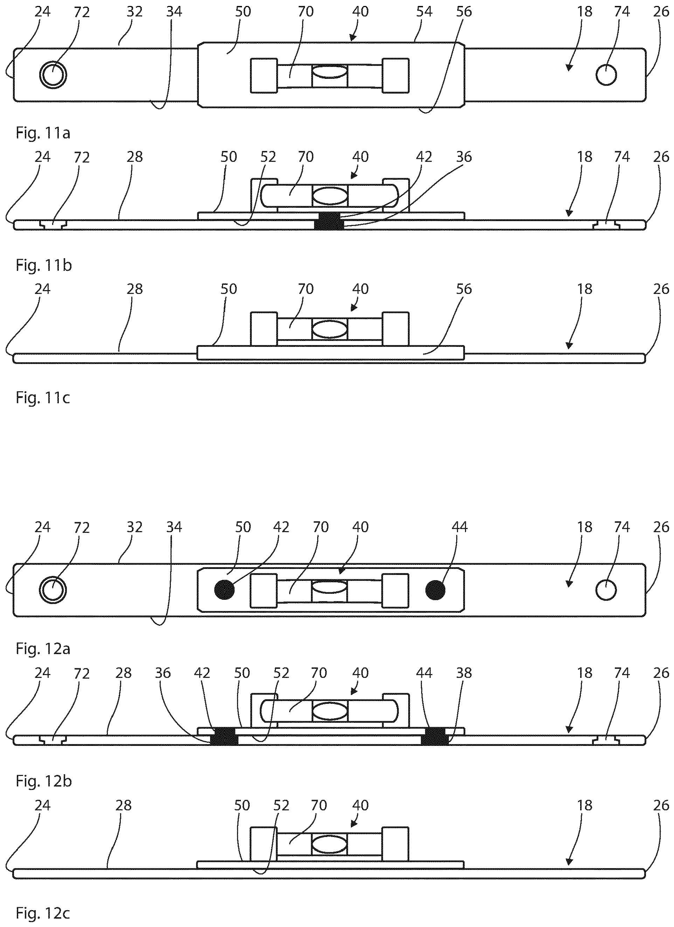

An assembly of an accessory with a spirit level 70 and the inner section 18 of Figs. 3a and 3b is shown in Figs. 11a to 11c. The accessory 40 has a base portion 50 with a first accessory magnet 42 in the form of a permanent neodymium magnet located at the first magnet 36 of the inner section 18. Apart from the first accessory magnet 42, the base portion 50 is manufactured from a non-magnetic plastic. The poles of the first accessory magnet 42 are aligned with the poles of the first magnet 36 so that magnets 36 and 42 attract each other. In an alternative embodiment, the first and second accessory magnets 42 and 44 are replaced with first and second magnetizable portions 42 and 44 of ferromagnetic steel.

The base portion 50 has a planar support surface 52 that engages and is flush with the first side 28 of the section body 92. The accessory 40 further has an elongated first side portion 54 and an elongated second side portion 56 that are connected to the base portion 50 and engages and extends along the first edge 32 and the second edge 34 of the section body 92, respectively, thus defining the orientation of the accessory 40 relative to the inner section 18. The side portions 54 and 56 have a length transversely to the support surface 52 that is smaller than the thickness of the inner section 18. This way, they do not extend from the inner section 18.

The spirit level 70 is supported by the base portion 50 and extends parallel to the first edge 32 and the second edge 34. As is shown in Fig. 11a, it indicates a horizontal orientation with the first edge 32 and the second edge 34 of the folding-rule section 14 oriented horizontally and the first side 28 and second side 30 of the folding-rule section 14 oriented vertically.

An assembly of an accessory 40 with a spirit level 70 and the inner section 18 of Figs. 5a and 5b is shown in Figs. 12a to 12c. The indexing of Figs. 11a to 11c has been maintained for features having the same function. The accessory 40 has no side portions and no narrow portion, and the width of the base portion 50 is smaller than the width of the end section 16. In an alternative embodiment the widths are the same.

The orientation of the accessory 40 is defined by a first accessory magnet 42 and a second accessory magnet 44 in the form of a permanent neodymium magnets located at and centred on the first magnet 36 and second magnet 38 of the end section 16. Apart from the first and second accessory magnets 42 and 44, the accessory 40 is manufactured from a non-magnetic plastic. The poles of the first accessory magnet 42 are aligned with the poles of the first magnet 36 so that magnets 36 and 42 attract each other. Similarly, the poles of the second accessory magnet 44 are aligned with the poles of the second magnet 38. In an alternative embodiment, the first and second accessory magnets 42 and 44 are replaced with a first and second magnetizable portion 42 and 44 of ferromagnetic steel.

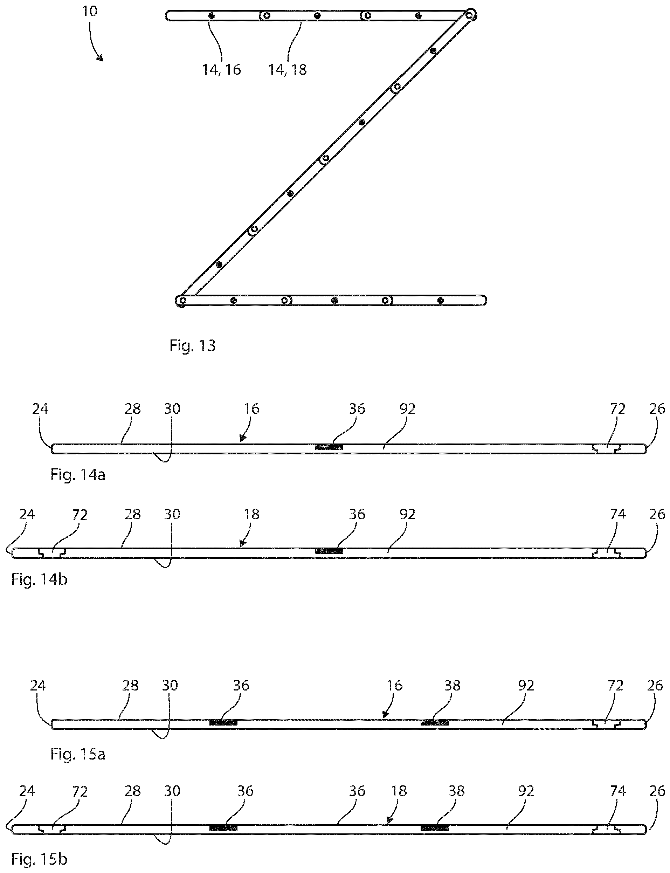

An alternative folding rule 10 to the one shown in Figs. 1a and 1b is shown in a partly expanded state is in Fig. 13. The end sections 16 are all end sections 16 as described in relation to Figs. 2a and 2b, and all inner sections 18 are inner sections 18 as described in relation to Figs. 3a and 3b. Each of the first magnets 36 generate an attractive force of 0.2N at contact with an object of demagnetized pure iron, which means that the force is approximately 2 times greater than the gravitational force acting on the folding-rule section 14 having a weight of 10g. In the collapsed state corresponding to Fig. 1a, all the poles of all the first magnets 36 are oriented and positioned so that magnets on neighbouring folding rule sections 14 are attracted to each other and their respective magnetic fields add. The first magnets 36 are all aligned with the line of gravity 90 transverse to the first and second sides 28 and 30.

In the above-described embodiments of end and inner sections 16 and 18, the first magnet 36 is flush with the first side and the second side 30 of the section body 92. An alternative end section 16 to the end section 16 in Figs. 2a and 2b is shown in Fig. 14a and an alternative inner section 18 to the inner section 18 in Figs. 3a and 3b is shown in Fig. 14b. The sections 16 and 18 differ in that the second side 30 of the section body 92 extends over the first magnet 36 so that the first magnet 36 is spaced apart from the second side 30.

An alternative end section to the end section in Figs. 4a and 4b is shown in Fig. 15a and an alternative inner section to the inner section in Figs. 5a and 5b is shown in Fig. 15b. The sections 16 and 18 differ from the previously described sections in that the second side 30 of the section body 92 extends over the first and second magnets 36 and 38 so that the first and second magnets 36 and 38 are spaced apart from the second side 30.

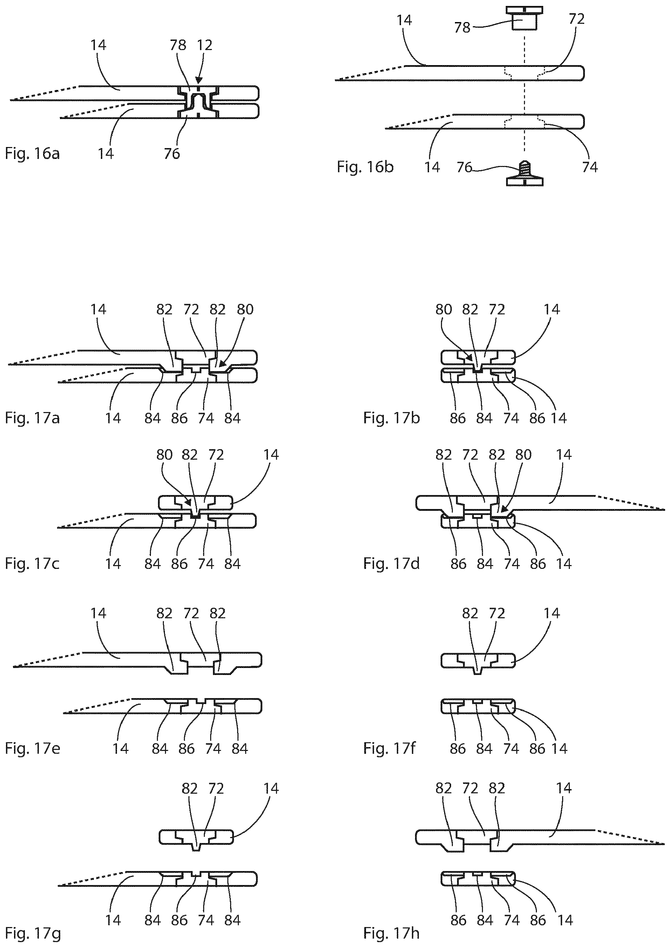

A joint of the folding rule in Figs. 1a and 1b is shown in Figs. 16a and 16b. Each rotary joint 12 connects a pair of neighbouring sections 14 in the series of sections 14. A first section 14 of the pair has a tapered counterbored first through hole 72 at the rotary joint 12, a second section 14 of the pair has a tapered counterbored second through hole 74 at the rotary joint 12, and the first through hole 72 and the second through hole 74 are aligned.

The rotary joint 12 is composed of a female screw 78 and a male screw 76 releasably connected to the female screw 78 via the first through hole 72 and the second through hole 74 and cooperating to press the first section 14 and the second section 14 together. This way, the rotary joint 12 is removable.

The female screw 78 has a screw head engaging the first section 14 and the male screw 76 has a screw head engaging the second section 14. Both screw heads have a tool interface in the form of a slot for cooperation with a slotted screwdriver.

A lock 80 of the folding rule 10 of Figs. 1a and 1b is shown in Figs. 17a to 17f. The lock 80 has one or more protrusions 82 formed by the first section 14, one or more first depressions 84 formed by the second section 14, and one or more second depressions 86 formed by the second section 14. The protrusions 82 face the second section 14 and the first depressions 84 and the second depressions 86 face the first section 14. The protrusions 82 cooperate with the first depressions 84 and releasably locks the first section 14 and the second section 14 in the collapsed state and the expanded state. The protrusions 82 further cooperate with the second depressions 86 and releasably locks the first section 14 and the second section 14 in the intermediate states.

In the collapsed state the first section 14 and the second section 14 are aligned and overlap, as shown in Fig. 1a and Figs. 17a and 17b. The corresponding exploded view is shown in Figs 17e and 17f. In the expanded state the first section 14 and the second section 14 are aligned and extend from one another, as the end sections 16 and the neighbouring inner sections 18 in Fig. 1b. In the first and a second intermediate state the first section 14 and the second section 14 are at a right angle to one another, as shown in Figs. 17c and 17d. The corresponding exploded view is shown in Figs. 17g and 17h.

### Item list

- 10: folding rule
- 12: joint
- 14: folding-rule section
- 16: end section
- 18: inner section
- 20: first end section
- 22: second end section
- 24: first end
- 26: second end
- 28: first side
- 30: second side
- 32: first edge
- 34: second edge
- 36: first magnet
- 38: second magnent
- 40: accessory
- 42: first accessory magnet
- 44: second accessory magnet
- 46: forward end of accessory
- 48: rear end of accessory
- 50: base portion
- 52: support surface
- 54: first side portion
- 56: second side portion
- 58: narrow portion
- 60: aperture or window
- 62: hook or tang
- 64: marker support
- 66: through hole
- 68: cutting edge
- 70: spirit level
- 72: first through hole
- 74: second through hole
- 76: male screw
- 78: female screw
- 80: lock
- 82: protrusions
- 84: first depressions
- 86: second depressions
- 88: geometric center, or center of gravity, of section
- 90: line of gravity of folding rule
- 92: section body

## Claims

**1.** A folding-rule section (14), or strip (14), for a folding rule (10), wherein the folding-rule section (14) comprises:
- an elongated section body (92) having a first end (24), a second end (26), a first side (28), a second side (30), a first edge (32), and a second edge (34), wherein
the first side (28) and the second side (30) are elongated, planar, parallel, and extend between the first end (24) and the second end (26), and the first edge (32) and a second edge (34) are straight, parallel, extend between the first end (24) and the second end (26) and interconnect the first side (28) and the second side (30), and
the folding-rule section (14) further comprises:
- a first magnet (36) embedded in the section body (92) and located between the first end (24) and the second end (26).

**2.** The folding-rule section (14) according to claim 1, wherein the section body has a geometric center (88), or center-of-gravity, between the first end (24) and the second end (26), and the first magnet (36) is located closer to the geometric center (88) than to the first end (24) and the second end (26).

**3.** The folding-rule section (14) according to claim 1, wherein the folding-rule section (14) comprises: a second magnet (38) embedded in the folding-rule section (14), located between the first end (24) and the second end (26), and spaced apart from the first magnet (40).

**4.** The folding-rule section (14) according to claim 3, wherein the folding-rule section (14) has a geometric center (88), or center-of-gravity, between first end (24) and the second end (26), and the first magnet (36) is located between the geometric center (88) and the first end (24) and the second magnet (38) is located between the geometric center (88) and the second end (24).

**5.** An accessory (40) for use in combination with a folding-rule section (14) according to any of the claims 1-4, wherein the accessory (40) comprises: a base portion (50) configured to cooperate with, or couple to, the first magnet (36) and attach the accessory (40) to the folding-rule section (14).

**6.** The accessory (40) according to claim 5, wherein the base portion comprises: a first accessory magnet (42) supported by the base portion (50) and configured to cooperate with, or couple to, the first magnet (36) of the folding-rule section (14) .

**7.** The accessory (40) according to claim 5 or 6, wherein the accessory (40) comprises: a first side portion (54) and a second side portion (56), wherein the first side portion (54) and the second side portion (56) are connected to the base portion (50) and configured to engage the first edge (32) and the second edge (34) of the section body (92) of the folding-rule section (14), respectively, to mechanically prevent the accessory (40) from rotating relative to the folding-rule section (14).

**8.** The accessory (40) according to any of the claims 5 to 7, wherein the folding-rule section (14) is an end section (16) and the accessory (40) comprises: a hook (62) supported by, or connected to, and extending from the base portion (50) and configured to engage, or about, the first end (24) or the second end (26) of the section body (92).

**10.** The accessory (40) according to claim 10, wherein the hook (62) defines a tang (62) configured to extend from the folding-rule section (14) at the first end (24) or the second end (26) for engaging a corner in a measurement, or during use.

**11.** The accessory (40) according to claim 10 or 11, wherein the hook (62) forms, or comprises, a cutting edge (68) for cutting in a measurement, or during use.

**12.** The accessory (40) according to any of the claims 5 to 11, wherein the accessory (40) comprises a marker support (64) configured to support a marker in a measurement, or during use.

**13.** The accessory (40) according to any of the claims 5 to 12, wherein the accessory (40) comprises a spirit level (70) supported by the base portion (54).

**14.** An assembly comprising a folding-rule section (14) according to any of the claims 1 to 4 and an accessory (40) according to any of the claims 5 to 13.

**15.** A folding rule (10) comprising:
a plurality of sections (14) and
a plurality of rotary joints (12),
wherein the rotary joints (12) connect the sections (14) in a series, and at least one of the sections (14) is a folding-rule section (14) according to any of the claims 1 to 5.
